# EUROPEAN PATENT APPLICATION

(11) **EP 4 086 701 A1**
(43) Date of publication of application: **09.11.2022**
(21) Application number: 20915650.4
(22) Date of filing: 11.12.2020
(51) Int. Cl.: G03B 21/14, F21V 29/15, F21S 2/00

(54) **OPTICAL ELEMENT, LIGHT SOURCE DEVICE, AND PROJECTOR**

(30) Priority: 22.01.2020 JP 2020008439
(71) Applicant: Sony Group Corporation, Minato-Ku, Tokyo, 108-0075 (JP)
(72) Inventor: MAEDA Yuki, Tokyo 108-0075 (JP)
(74) Representative: D Young & Co LLP
(86) International application number: PCT/JP2020/046202
(87) International publication number: WO 2021/149392

(57) **Abstract**

To provide an optical element capable of realizing an increase in color gamut of videos and an improvement in brightness of the videos, a light source device including the optical element, and a projector including the light source device. Provided is an optical element including: a first color conversion layer; a second color conversion layer; and a heat insulating layer, in which the heat insulating layer is disposed between the first color conversion layer and the second color conversion layer, a light source device including the optical element, and a projector including the light source device.

## Description

### [Technical Field]

The present technique relates to an optical element, a light source device, and a projector.

### [Background Art]

In recent years, projectors that are in increasing demand for movie watching and presentation in conferences and the like have been required to provide bright videos in wide color gamut.

For example, techniques related to a wavelength conversion element having a two-layer structure using two phosphors and a light source device and a projector including the wavelength conversion element have been proposed (see PTL 1).

### [Citation List]

### [Patent Literature]

[PTL 1]
JP 2018-36457 A

### [Summary]

### [Technical Problem]

However, there is concern that it may not be possible to obtain bright videos in wide color gamut according to the techniques proposed in PTL 1.

Thus, the present technique was made in view of such a circumstance, and a main object thereof is to provide an optical element capable of realizing an increase in color gamut of videos and an improvement in brightness of the videos, a light source device including the optical element, and a projector including the light source device.

### [Solution to Problem]

Surprisingly, the present inventors have successfully realized an increase in color gamut of videos and an improvement in brightness of videos and have completed the present technique as a result of intensive studies to achieve the aforementioned object.

In other words, according to a first aspect of the present technique,
there is provided an optical element including: a first color conversion layer; a second color conversion layer; and a heat insulating layer, in which the heat insulating layer is disposed between the first color conversion layer and the second color conversion layer.

In the optical element according to the present technique,
the heat insulating layer may have light transmittance.

In the optical element according to the present technique,
the heat insulating layer may contain a material with light transmittance.

In the optical element according to the present technique,
at least any one of the first color conversion layer and the second color conversion layer may have recessed and projecting portions, and
the heat insulating layer may be formed by the first color conversion layer and the second color conversion layer being bonded via the projecting portion.

In the optical element according to the present technique,
at least any one of the first color conversion layer and the second color conversion layer may have a recessed portion, and
the heat insulating layer may be formed by the first color conversion layer and the second color conversion layer being bonded via the recessed portion.

In the optical element according to the present technique,
the first color conversion layer and the second color conversion layer may be bonded via a bonding layer.

In the optical element according to the present technique,
the bonding layer may have a heat insulating property.

In the optical element according to the present technique,
the bonding layer may include a bead.

The optical element according to the present technique may further include: a first substrate,
in which the first substrate may have heat conductivity, and
the heat insulating layer and the first substrate may be disposed to face each other via the first color conversion layer.

In the optical element according to the present technique, the first substrate may have light reflectivity.

In the optical element according to the present technique,
the first substrate may have light transmittance.

In the optical element according to the present technique,
the first substrate may include a region with light transmittance and a region with light reflectivity.

In the optical element according to the present technique,
the second color conversion layer and the first substrate may be bonded via a first bonding member, and
the first bonding member may have heat conductivity.

In the optical element according to the present technique,
the first bonding member and the first substrate may be bonded via a second bonding member, and
the second bonding member may have a heat insulating property.

In the optical element according to the present technique,
the first substrate may have a recessed portion on a side of the heat insulating layer, and
the first color conversion layer may be embedded in the recessed portion.

The optical element according to the present technique may further include: a second substrate,
the second substrate may have heat conductivity, and
the heat insulating layer and the second substrate may be disposed to face each other via the second color conversion layer.

In the optical element according to the present technique,
the second substrate may have light transmittance.

In the optical element according to the present technique,
the second substrate may include a region with light transmittance and a region with light reflectivity.

Also, according to a second aspect of the present technique, there is provided a light source device including:
the optical element according to the first aspect of the present technique; and
a light source that outputs excitation light; and
a moving mechanism that causes a position at which the optical element is irradiated with the excitation light to move with time.

Moreover, according to a third aspect of the present technique,
there is provided a projector including:
the light source device according to the second aspect of the present technique, and
an image projection device that generates predetermined image light using light emitted from the light source device and projects the generated image light to outside.

According to the present technique, it is possible to provide an optical element capable of realizing an increase in color gamut of videos and an improvement in brightness of the videos, a light source device including the optical element, and a projector including the light source device. Note that the effects described herein are not necessarily limited and any of the effects described in the present disclosure may be achieved.

### [Brief Description of Drawings]

[Fig. 1]

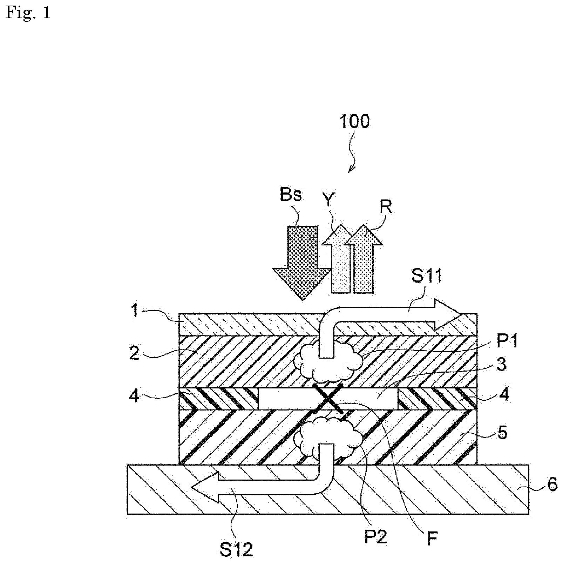

   Fig. 1 is a diagram illustrating a configuration example of an optical element according to a first embodiment to which the present technique is applied.
[Fig. 2]

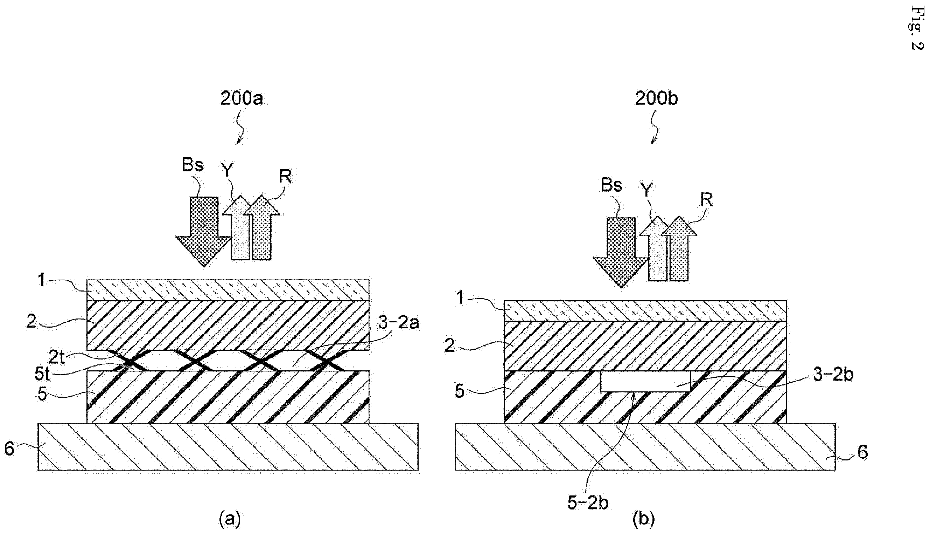

   Fig. 2 is a diagram illustrating a configuration example of an optical element according to a second embodiment to which the present technique is applied.
[Fig. 3]

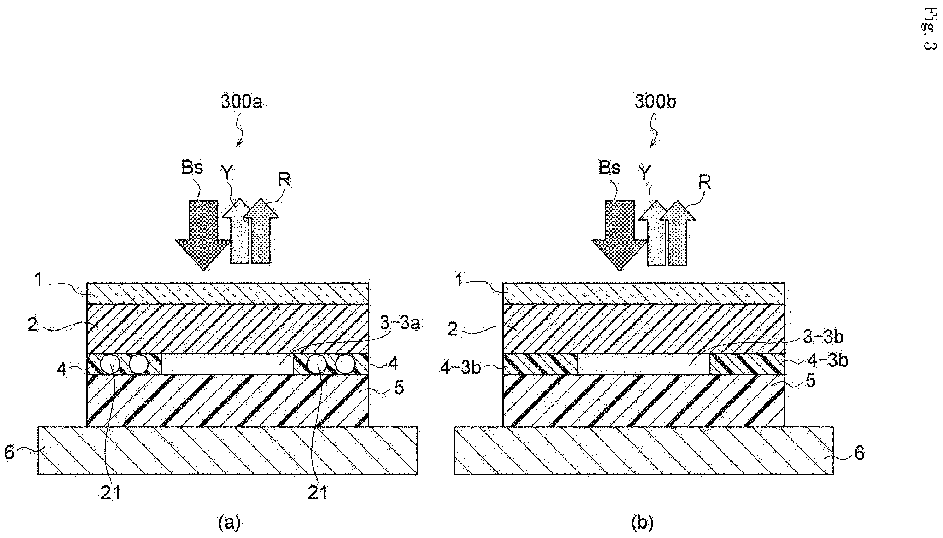

   Fig. 3 is a diagram illustrating a configuration example of an optical element according to a third embodiment to which the present technique is applied.
[Fig. 4]

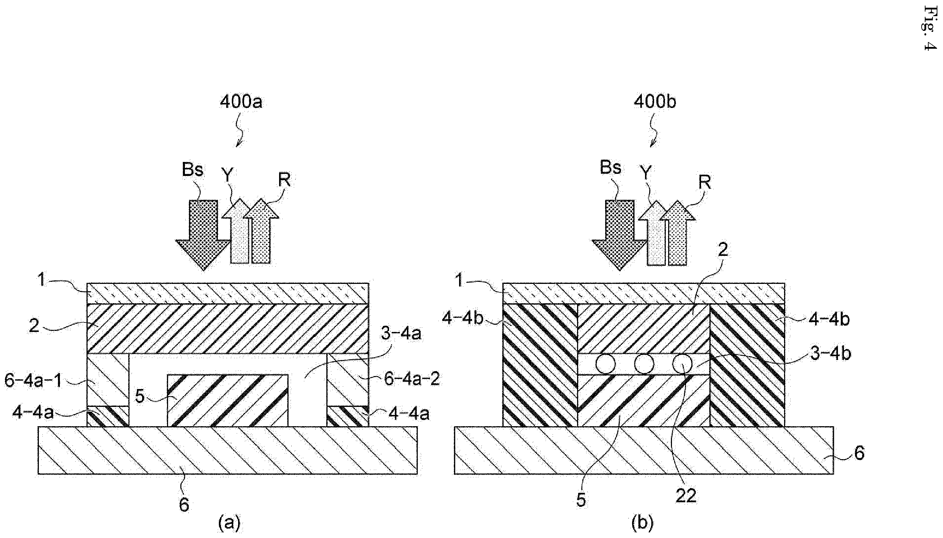

   Fig. 4 is a diagram illustrating a configuration example of the optical element according to the third embodiment to which the present technique is applied.
[Fig. 5]

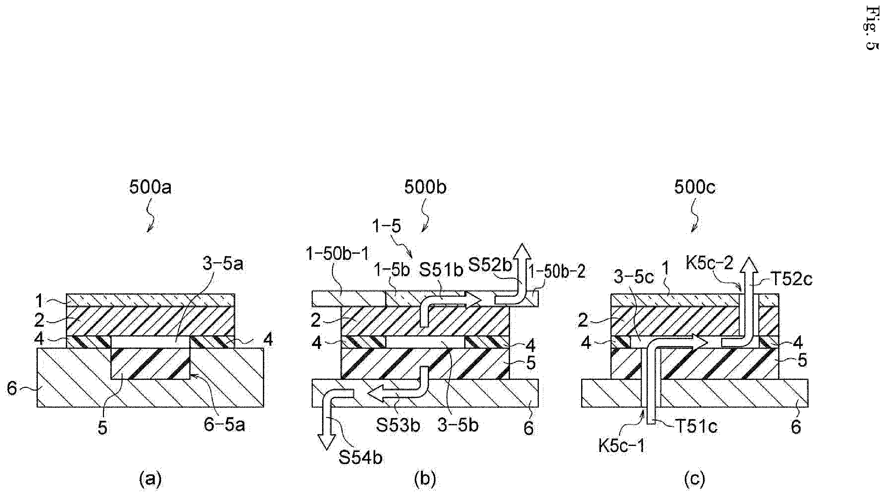

   Fig. 5 is a diagram illustrating a configuration example of an optical element according to a fourth embodiment to which the present technique is applied.
[Fig. 6]

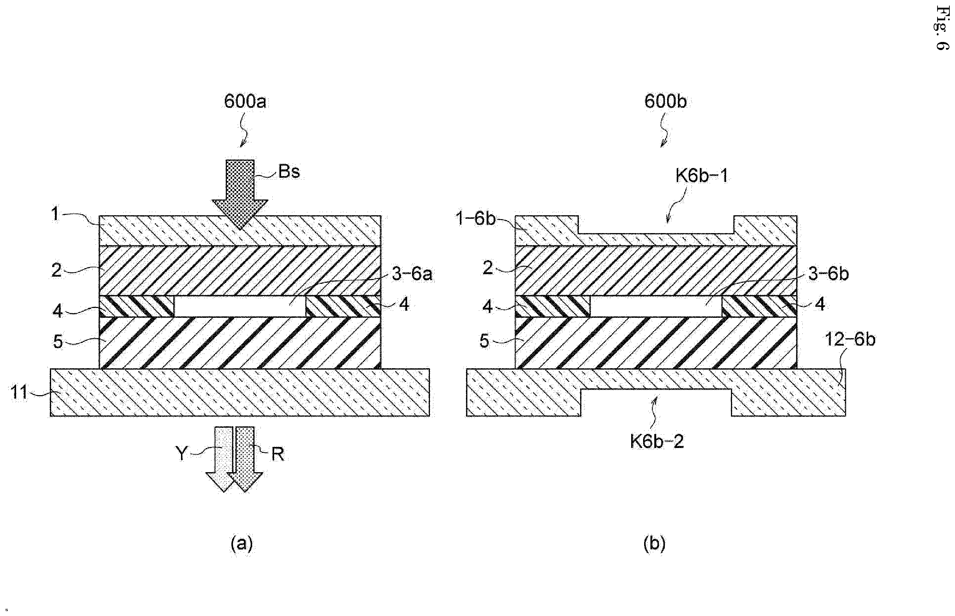

   Fig. 6 is a diagram illustrating a configuration example of an optical element according to a fifth embodiment to which the present technique is applied.
[Fig. 7]

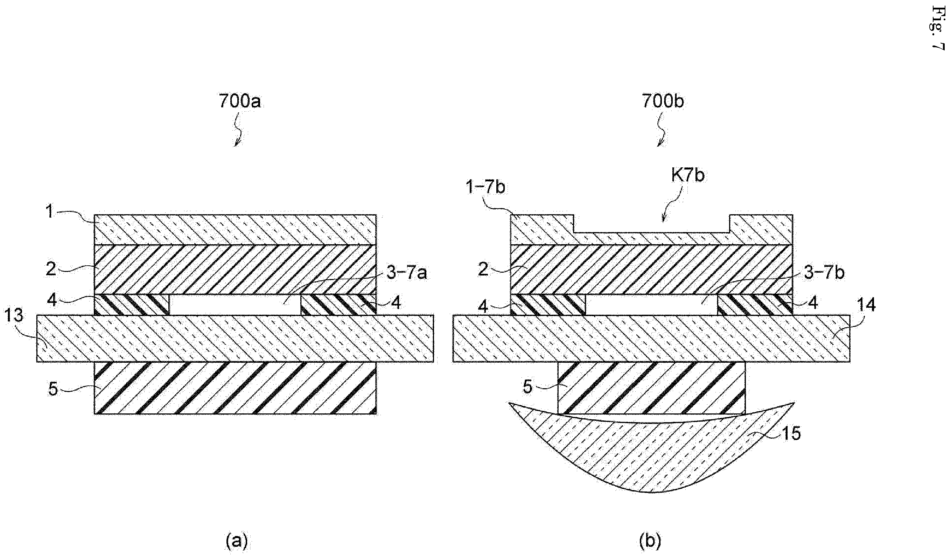

   Fig. 7 is a diagram illustrating a configuration example of the optical element according to the fifth embodiment to which the present technique is applied.
[Fig. 8]

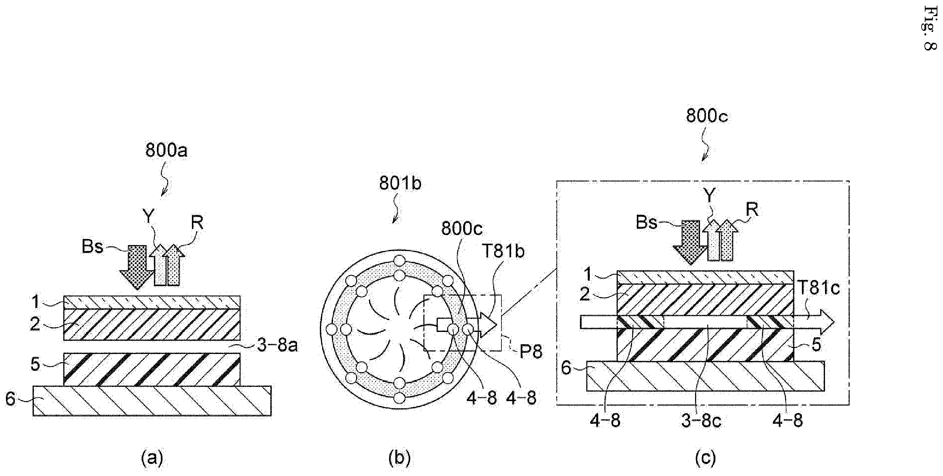

   Fig. 8 is a diagram illustrating a configuration example of an optical element according to a sixth embodiment to which the present technique is applied.
[Fig. 9]

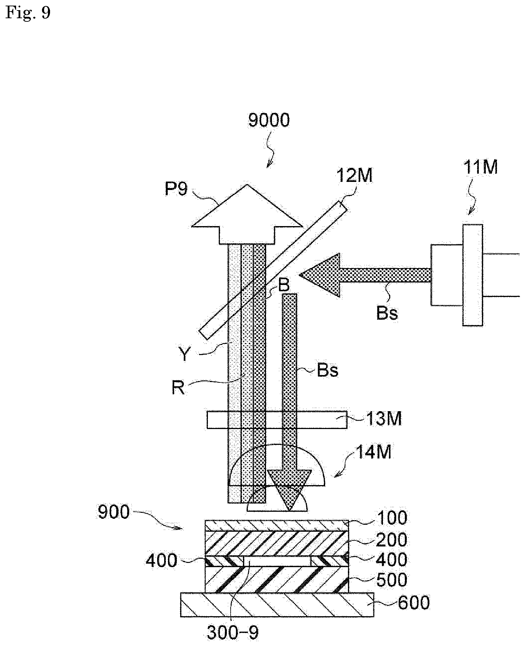

   Fig. 9 is a diagram illustrating a configuration example of a light source device according to a seventh embodiment to which the present technique is applied.
[Fig. 10]

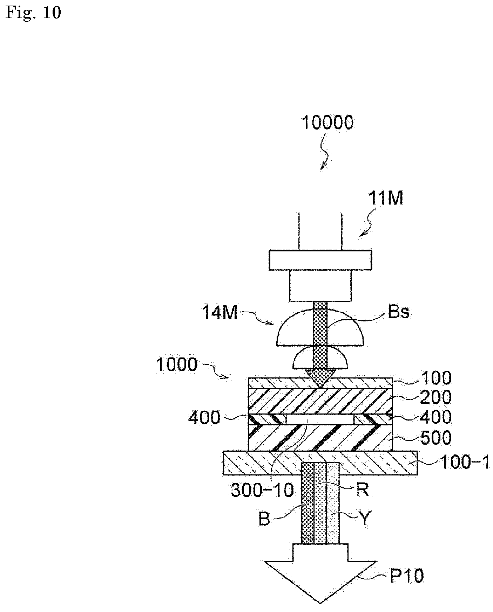

   Fig. 10 is a diagram illustrating a configuration example of a light source device according to an eighth embodiment to which the present technique is applied.
[Fig. 11]

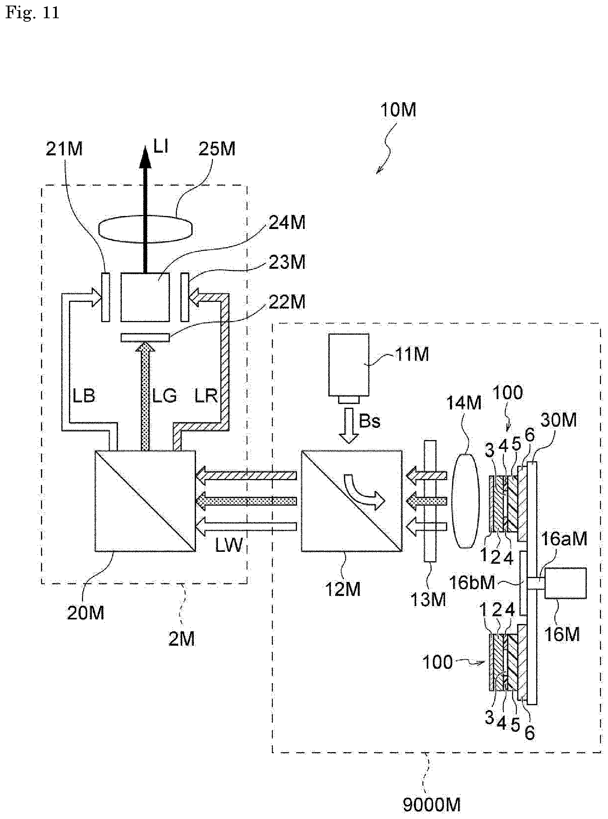

   Fig. 11 is a diagram illustrating a configuration example of a projector according to a ninth embodiment to which the present technique is applied.

### [Description of Embodiments]

Preferred embodiments to implement the present technique will be described below. The embodiments described below illustrate examples of representative embodiments of the present technique, and these are not intended to narrow interpretation of the scope of the present technique. Note that in the drawings, "up" means the upward direction or the upper side in the drawings, "down" means the downward direction or the lower side in the drawings, "left" means the leftward direction or the left side in the drawings, and "right" means the rightward direction or the right side in the drawings unless particularly indicated otherwise. Also, the same reference signs will be applied to the same or equivalent elements or members in the drawings, and repeated description will be omitted.

Note that the descriptions will be given in the following order.
1. Outline of present technique
2. First embodiment (Example 1 of optical element)
3. Second embodiment (Example 2 of optical element)
4. Third embodiment (Example 3 of optical element)
5. Fourth embodiment (Example 4 of optical element)
6. Fifth embodiment (Example 5 of optical element)
7. Sixth embodiment (Example 6 of optical element)
8. Seventh embodiment (Example 1 of light source device)
9. Eighth embodiment (Example 2 of light source device)
10. Ninth embodiment (Example of projector)

### <1. Outline of present technique>

First, an outline of the present technique will be described. The present technique relates to an optical element, a light source device, and a projector.

There is a technique of causing color conversion layers to have a double-layer structure for a light source that uses color conversion achieved by a phosphor or the like as one of methods for complementing insufficient colors with a single light emission spectrum.

In the double-layer structure of the technique, the two color conversion layers have a structure in which they are in direct contact with each other. However, since heat of each layer is delivered to the other in this case, heat transmission significantly affects a material with high efficiency change sensitivity with respect to a temperature, in particular, and there is a concern that conversion efficiency significantly deteriorates. Examples of the material with high efficiency conversion sensitivity with respect to a temperature includes a quantum dot. The present technique provides a double-layer structure including a layer using a quantum dot and a layer using a phosphor with a heat insulating layer included between the two layers. Moreover, according to the present technique, a substrate that transports heat and dissipates the heat may be formed in each layer in the double-layer structure. It is possible to curb heat transmission between the layers and also to effectively cool each layer by employing the double-layer structure. As a result, according to the present technique, it is possible to improve light emission efficiency of an optical element, to realize size reduction and an increase in luminance of a light source, and further to realize an increase in color gamut of videos and an improvement in brightness of the videos.

Hereinafter, preferred embodiments to implement the present technique will be described with reference to the drawings. The embodiments described below illustrate examples of representative embodiments of the present technique, and these are not intended to narrow interpretation of the scope of the present technique.

### <2. First embodiment (Example 1 of optical element)>

An optical element according to a first embodiment (Example 1 of the optical element) of the present technique will be described using Fig. 1. Fig. 1 is a diagram illustrating a configuration example of the optical element according to the first embodiment of the present technique, and more specifically, Fig. 1 is a sectional view of an optical element 100 according to the first embodiment.

The optical element 100 illustrated in Fig. 1 includes a first color conversion layer 5, a second color conversion layer 2, and a heat insulating layer 3 with the heat insulating layer 3 disposed between the first color conversion layer 5 and the second color conversion layer 2. In other words, the heat insulating layer 3 is provided between the first color conversion layer 5 and the second color conversion layer 2 with the first color conversion layer 5 and the second color conversion layer 2 caused to face each other. For the first color conversion layer 5, a light emitting material with low excitation density and high temperature dependency is used. The first color conversion layer 5 is a layer obtained by mixing a red quantum dot (QD) powder into a resin, for example. Examples of the red quantum dot include CdSe/ZnS and InP/ZnS. The second color conversion layer 2 is, for example, a layer obtained by mixing yttrium aluminum garnet (YAG) phosphor powder into a resin.

The heat insulating layer 3 preferably has light transmittance to excite the first color conversion layer 5. Also, the heat insulating layer 3 may be, for example, an air layer, and the height of the heat insulating layer 3 (also referred to a gap; the length in the up-down direction in Fig. 1) may be any height, for example, 1 to 500 µm, or an appropriate height may be about 10 pm in some cases. It is possible to curb movement of each of heat generated in the first color conversion layer 5 and heat generated in the second color conversion layer 2 to the other layer by including the heat insulating layer 3. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route for the first color conversion layer 5 from a heat dissipation route for the second color conversion layer 2 by disposing the heat insulating layer 3 (× mark F in Figure 1).

The optical element 100 illustrated in Fig. 1 further includes a first substrate 6. The first substrate 6 is a base substrate, has light reflectivity, and is constituted by an aluminum substrate including a light reflecting film, for example. As illustrated in Fig. 1, the heat insulating layer 3 and the first substrate 6 are disposed to face each other via the first color conversion layer 5. The first substrate 6 has heat conductivity, and heat P2 generated at the same time with light emission in the first color conversion layer 5 is propagated through the first substrate 6, and is dissipated to the outside of the optical element 100 as illustrated by the arrow S12, and temperature rise in the first color conversion layer 5 can thus be curbed.

The optical element 100 illustrated in Fig. 1 further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 1, the heat insulating layer 3 and the second substrate 1 are disposed to face each other via the second color conversion layer 2. The second substrate 1 has heat conductivity, and heat P1 generated at the same time with light emission in the second color conversion layer 2 is propagated through the second substrate 1 and is dissipated to the outside of the optical element 100 as illustrated by the arrow S11, and it is possible to curb a temperature rise in the second color conversion layer 2.

As illustrated in Fig. 1, the first color conversion layer 5 and the second color conversion layer 2 are bonded via a bonding layer 4. The bonding layer 4 is formed in substantially the same layer as the heat insulating layer 3. Although the bonding layer 4 may or may not have a heat insulating property, the bonding layer 4 preferably has a heat insulating property in order to prevent each of heat generated in the first color conversion layer 5 and heat generated in the second color conversion layer 2 from further moving to the other layer. Note that the bonding layer 4 with a heat insulating property may be referred to as a heat insulating bonding layer 4 (the same applies to the following description).

Examples of actions and operations of the optical element 100 will be described. Note that the examples of the actions and the operations of the optical element 100 (the optical element in the first embodiment) can be applied to optical elements according to second to fourth and sixth embodiments of the present technique, which will be described later, as long as there are no technical contradictions, in particular.

Excitation light Bs is transmitted through the second substrate 1 and excites the second color conversion layer 2. The second substrate 1 may be, for example, a heat transporting substrate, have transmittance, and be a structure with a hole open in an excitation area.

The excited second color conversion layer 2 emits light. A part of the light emission passes through the second substrate 1 (heat transporting substrate) and is then outputted to the outside of the optical element 100 (double-layer structure device) (Y: yellow light).

The excitation light Bs that is a part of fluorescence emitted by the second color conversion layer 2 and/or a part transmitted through the second color conversion layer 2 passes through the heat insulating layer 3 and excites the first color conversion layer 5. The heat insulating layer is required to be a transparent medium.

The excited first color conversion layer 5 emits light. A part of the emitted light passes through the heat insulating layer 3, the second color conversion layer 2, and the first substrate 1 (heat transporting substrate) and is then outputted to the outside of the optical element 100 (double-layer structure device) (R: red light). Also, the remaining emitted light is reflected by the first substrate 6 (the base substrate, for example), passes through the first color conversion layer 5, the heat insulating layer 3, the second color conversion layer 2, and the second substrate 1 (heat transporting substrate), and is then outputted to the optical element 100 (R: red light). Also, a reflective film may be added to a surface (a surface on the side of the first color conversion layer 5) of the first substrate 6 (base substrate), and light using efficiency is further improved by the reflective film.

The light outputted from the optical element 100 is extracted to the outside of the light source by a lens and is incident on and used by an optical system such as an illumination system.

According to the first embodiment (Example 1 of the optical element) of the present technique, it is possible to achieve curbing of a temperature rise in the first color conversion layer 5 and the second color conversion layer 2 through heat insulation between the two layers (between the first color conversion layer 5 and the second color conversion layer 2), particularly curbing of temperature quenching of the light emission of the first color conversion layer 5, realizing an increase in efficiency of the light emission, realizing of size reduction of the light source through an improvement in light emission efficiency, curbing of deterioration of the quantum dots (QD) at the time of manufacturing, and the like.

The details described in regard to the optical element according to the first embodiment (Example 1 of the optical element) of the present technique can be applied to optical elements according to the second to sixth embodiments of the present technique, which will be described later, as long as there are no technique contradictions, in particular.

### <3. Second embodiment (Example 2 of optical element)>

An optical element according to the second embodiment (Example 2 of the optical element) of the present disclosure will be described using Fig. 2. Fig. 2 is a diagram illustrating a configuration example of the optical element according to the second embodiment of the present technique, and more specifically, Fig. 2(a) is a sectional view of an optical element 200a according to the second embodiment, and Fig. 2(b) is a sectional view of an optical element 200b according to the second embodiment.

The optical element 200a illustrated in Fig. 2(a) includes a first color conversion layer 5, a second color conversion layer 2, and a heat insulating layer 3-2a with the heat insulating layer 3-2a disposed between the first color conversion layer 5 and the second color conversion layer 2.

The heat insulating layer 3-2a is formed by the first color conversion layer 5 and the second color conversion layer 2 being bonded via a plurality of projecting portions 5t included in the first color conversion layer 5 and a plurality of projecting portions 2t included in the second color conversion layer 2. In order to form the heat insulating layer 3-2a, any one of the first color conversion layer 5 and the second color conversion layer 2 may have the projecting portions, or a bonding surface of at least any one layer out of the first color conversion layer 5 and the second color conversion layer 2 may be a rough surface (Ra of 100 nm or more, for example).

The heat insulating layer 3-2a preferably has light transmittance in order to excite the first color conversion layer 5. Also, the heat insulating layer 3-2a is, for example, an air layer, and the height (also referred to as a gap; the length in the up-down direction in Fig. 2(a)) of the heat insulating layer 3-2a may be any height, and for example, 1 to 500 µm, and an appropriate height may be about 10 µm in some cases. It is possible to curb movement of each of heat generated in the first color conversion layer 5 and heat generated in the second color conversion layer 2 to the other layer by including the heat insulating layer 3-2a. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-2a.

The optical element 200a illustrated in Fig. 2(a) further includes a first substrate 6. The first substrate 6 is a base substrate, has light reflectivity, and is constituted by an aluminum substrate including a light reflecting film, for example. As illustrated in Fig. 2(a), the heat insulating layer 3-2a and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 200a, and a temperature rise in the first color conversion layer 5 can thus be curbed.

The optical element 200a illustrated in Fig. 2(a) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 2(a), the heat insulating layer 3-2a and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 200a, and a temperature rise in the second color conversion layer 2 can thus be curbed.

Although the optical element 200a does not have a bonding layer to bond the first color conversion layer 5 to the second color conversion layer 2, the optical element 200a may have the bonding layer 4 illustrated in the above section of the first embodiment.

The optical element 200b illustrated in Fig. 2(b) includes a first color conversion layer 5, a second color conversion layer 2, and a heat insulating layer 3-2b with the heat insulating layer 3-2b disposed between the first color conversion layer 5 and the second color conversion layer 2.

The heat insulating layer 3-2b is formed by the first color conversion layer 5 and the second color conversion layer 2 being bonded via a recessed portion 5-2b included in the first color conversion layer 5. The recessed portion 5-2b is preferably formed to correspond to a region where heat is generated in the first color conversion layer 5 and the second color conversion layer 2 through light emission. Also, although not illustrated in the drawing, the second color conversion layer 2 may have a recessed portion, or both the first color conversion layer 5 and the second color conversion layer 2 may have projecting portions to form the heat insulating layer 3-2b.

The heat insulating layer 3-2b preferably has light transmittance in order to excite the first color conversion layer 5. Also, the heat insulating layer 3-2b is, for example, an air layer, the height (also referred to as a gap; the length in the up-down direction in Fig. 2(b)) of the heat insulating layer 3-2b may be any height, and for example, 1 to 500 µm, and an appropriate height may be about 10 µm in some cases. It is possible to curb movement of each of heat generated in the first color conversion layer 5 and heat generated in the second color conversion layer 2 to the other layer by including the heat insulating layer 3-2b. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-2b.

The optical element 200b illustrated in Fig. 2(b) further includes a first substrate 6. The first substrate 6 is a base substrate, has light reflectivity, and is constituted by an aluminum substrate including a light reflecting film, for example. As illustrated in Fig. 2(b), the heat insulating layer 3-2b and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 200b, and a temperature rise in the first color conversion layer 5 can thus be curbed.

The optical element 200b illustrated in Fig. 2(b) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 2(b), the heat insulating layer 3-2b and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 200b, and a temperature rise in the second color conversion layer 2 can thus be curbed.

According to the second embodiment (Example 2 of the optical element) of the present technique, it is possible to curb a temperature rise in the first color conversion layer 5 and the second color conversion layer 2 through heat insulation between the two layers (between the first color conversion layer 5 and the second color conversion layer 2), and in particular, it is possible to realize curbing of temperature quenching of light emission of the first color conversion layer 5, realizing of an increase in efficiency of light emission, realizing of size reduction of the light source through an improvement in light emission efficiency, curbing of deterioration of the quantum dots (QD) at the time of manufacturing, and the like.

The details described above in regard to the optical element according to the second embodiment (Example 2 of the optical element) of the present technique can be applied to the optical element according to the aforementioned first embodiment of the present technique and the optical elements according to the third to sixth embodiments of the present technique, which will be described later, as long as there are no technical contradictions, in particular.

### <4. Third embodiment (Example 3 of optical element)>

The optical element according to the third embodiment (Example 3 of the optical element) of the present technique will be described using Figs. 3 and 4. Fig. 3 is a diagram illustrating a configuration example of the optical element according to the third embodiment of the present technique, and more specifically, Fig. 3(a) is a sectional view of an optical element 300a according to the third embodiment, and Fig. 3(b) is a sectional view of an optical element 300b according to the third embodiment. Fig. 4 is a diagram illustrating a configuration example of the optical element according to the third embodiment of the present technique, and more specifically, Fig. 4(a) is a sectional view of an optical element 400a according to the third embodiment, and Fig. 4(b) is a sectional view of an optical element 400b according to the third embodiment.

The optical element 300a illustrated in Fig. 3(a) includes a first color conversion layer 5, a second color conversion layer 2, and a heat insulating layer 3-3a with the heat insulating layer 3-3a disposed between the first color conversion layer 5 and the second color conversion layer 2.

The heat insulating layer 3-3a preferably has light transmittance in order to excite the first color conversion layer 5. Also, the heat insulating layer 3-3a is, for example, an air layer, the height (also referred to as a gap; the length in the up-down direction in Fig. 3(a)) of the heat insulating layer 3-3a may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-3a. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-3a.

The optical element 300a illustrated in Fig. 3(a) further includes a first substrate 6. The first substrate 6 is a base substrate, has light reflectivity, and is constituted by an aluminum substrate including a light reflecting film, for example. As illustrated in Fig. 3(a), the heat insulating layer 3-3a and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 300a, and a temperature rise in the first color conversion layer 5 can thus be curbed.

The optical element 300a illustrated in Fig. 3(a) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 3(a), the heat insulating layer 3-3a and the second substrate 1 are disposed to face via the second color conversion layer 2. The second substrate 1 has heat conductivity, the heat generated at the same time with light emission in the second color conversion layer 2 is propagated through the second substrate 1 and is then dissipated to the outside of the optical element 300a, and a temperature rise in the second color conversion layer 2 can thus be curbed.

As illustrated in Fig. 3(a), the first color conversion layer 5 and the second color conversion layer 2 are bonded via a bonding layer 4. The bonding layer 4 is formed in substantially the same layer as the heat insulating layer 3-3a. Although the bonding layer 4 may or may not have a heat insulating property, the bonding layer 4 preferably has a heat insulating property in order to prevent each of heat generated in the first color conversion layer 5 and heat generated in the second color conversion layer 2 from further moving to the other layer.

The bonding layer 4 includes a bead 21. Although the bead 21 may or may not have a heat insulating property, the bead 21 preferably has a heat insulating property in order to prevent each of heat generated in the first color conversion layer 5 and heat generated in the second color conversion layer 2 from moving to the other layer. Also, since it is possible to adjust the height (the length in the up-down direction in Fig. 3(a)) of the heat insulating layer 3-3a (an air layer or a gap, for example) with the bead diameter, it is possible to easily manufacture the heat insulating layer 3-3a (the air layer or the gap, for example) with the height of the heat insulating layer 3-3a (the air layer or the gap, for example) adjusted with high accuracy.

The optical element 300b illustrated in Fig. 3(b) includes a first color conversion layer 5, a second color conversion layer 2, and a heat insulating layer 3-3b with the heat insulating layer 3-3b disposed between the first color conversion layer 5 and the second color conversion layer 2.

The heat insulating layer 3-3b preferably has light transmittance in order to excite the first color conversion layer 5. Also, the heat insulating layer 3-3b is, for example, an air layer, the height (also referred to as a gap; the length in the up-down direction in Fig. 3(b)) of the heat insulating layer 3-3b may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-3b. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-3b.

The optical element 300b illustrated in Fig. 3(b) further includes a first substrate 6. The first substrate 6 is a base substrate, has light reflectivity, and is constituted by an aluminum substrate including a light reflecting film, for example. As illustrated in Fig. 3(b), the heat insulating layer 3-3b and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 300b, and a temperature rise in the first color conversion layer 5 can thus be curbed.

The optical element 300b illustrated in Fig. 3(b) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 3(b), the heat insulating layer 3-3b and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 300b, and a temperature rise in the second color conversion layer 2 can thus be curbed.

As illustrated in Fig. 3(b), the first color conversion layer 5 and the second color conversion layer 2 are bonded via a bonding layer 4-3b. The bonding layer 4-3b is formed in substantially the same layer as the heat insulating layer 3-3b. Although the bonding layer 4-3b may or may not have a heat insulating property, the bonding layer 4-3b preferably has a heat insulating property in order to prevent each of heat generated in the first color conversion layer 5 and heat generated in the second color conversion layer 2 from further moving to the other layer. The bonding layer 4-3b contains a heat expandable material, and the bonding layer 4-3b expands in the up-down direction in Fig. 3(b) due to heat such that the heat insulating layer 3-3b constituted by an air layer is formed.

The optical element 400a illustrated in Fig. 4(a) includes a first color conversion layer 5, a second color conversion layer 2, and a heat insulating layer 3-4a with the heat insulating layer 3-4a disposed between the first color conversion layer 5 and the second color conversion layer 2.

The heat insulating layer 3-4a preferably has light transmittance in order to excite the first color conversion layer 5. Also, the heat insulating layer 3-4a is, for example, an air layer. The height (also referred to as a gap; the length in the up-down direction in Fig. 4(a)) of the heat insulating layer 3-4a, that is, the length from the lower side of the second color conversion layer 2 to the upper side of the first color conversion layer 5 in the heat insulating layer 3-4a may be any length, for example, 1 to 500 µm, and an appropriate length may be about 10 pm in some cases. It is possible to curb movement of each of heat generated in the first color conversion layer 5 and heat generated in the second color conversion layer 2 to the other layer by including the heat insulating layer 3-4a. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-4a.

As illustrated in Fig. 4(a), the heat insulating layer 3-4a is formed outside the left side, the upper side, and the right side of the first color conversion layer 5. In other words, the first color conversion layer 5 is disposed to be embedded inside the heat insulating layer 304a. Movement of the heat generated in the first color conversion layer 5 to the second color conversion layer 2 is further curbed through the disposition of the heat insulating layer 3-4a.

The optical element 400a illustrated in Fig. 4(a) further includes a first substrate 6. The first substrate 6 is a base substrate, has light reflectivity, and is constituted by an aluminum substrate including a light reflecting film, for example. As illustrated in Fig. 4(a), the heat insulating layer 3-4a and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 400a, and a temperature rise in the first color conversion layer 5 can thus be curbed.

The optical element 400a illustrated in Fig. 4(a) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 4(a), the heat insulating layer 3-4a and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 400a, and a temperature rise in the second color conversion layer 2 can thus be curbed.

In the optical element 400a, the second color conversion layer 2 and a first bonding member 6-4a-1 are bonded, the first bonding member 6-4a-1 and a second bonding member 4-4a are bonded, and the second bonding member 4-4a and the first substrate 6 are bonded. The first bonding member 6-4a-1 has heat conductivity, the heat generated at the same time with light emission in the second color conversion layer 2 is propagated to the first bonding member 6-4a-1 as well and is then dissipated to the outside of the optical element 400a, and it is thus possible to further curb a temperature rise in the second color conversion layer 2. Also, the second bonding member 4-4a has a heat insulating property, and the second bonding member 4-4a can block the heat generated in the first color conversion layer 5 and the heat generated in the second color conversion layer 2 such that the heat do not move therebetween. Note that the second color conversion layer 2 and the first bonding member 6-4a-1 may be bonded directly to each other without using the second bonding member 4-4a (that is, the second color conversion layer 2 and the first substrate 6 are bonded via the first bonding member 6-4a-1 without using the second bonding member 4-4a), such that the heat dissipation route for the first color conversion layer 5 and the heat dissipation route for the second color conversion layer 2 may be merged.

The optical element 400b illustrated in Fig. 4(b) includes a first color conversion layer 5, a second color conversion layer 2, and a heat insulating layer 3-4b with the heat insulating layer 3-4b disposed between the first color conversion layer 5 and the second color conversion layer 2.

The heat insulating layer 3-4b preferably has light transmittance in order to excite the first color conversion layer 5. Also, the heat insulating layer 3-4b is, for example, an air layer, the height (also referred to as a gap; the length in the up-down direction in Fig. 4(b)) of the heat insulating layer 3-4b may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-4b. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-4b.

The heat insulating layer 3-4b includes a bead 22. The bead 22 may be constituted by a material with light transmittance, and examples of the material with light transmittance include glass. Utilization of the bead with light transmittance leads to an increase in light scattering and an improvement in light using efficiency. Also, the bead 22 may be a hollow bead with light transmittance, and the heat insulating property is further improved by using the hollow bead. Note that the heat insulating layer 3-4b is not limited to the inclusion of the bead 22, it is only necessary to contain a material with light transmittance, and for example, the heat insulating layer 3-4b may be a layer filled with glass.

The optical element 400b illustrated in Fig. 4(b) further includes a first substrate 6. The first substrate 6 is a base substrate, has light reflectivity, and is constituted by an aluminum substrate including a light reflecting film, for example. As illustrated in Fig. 4(b), the heat insulating layer 3-4b and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 400b, and a temperature rise in the first color conversion layer 5 can thus be curbed.

The optical element 400b illustrated in Fig. 4(b) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 4(b), the heat insulating layer 3-4b and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 400b, and a temperature rise in the second color conversion layer 2 can thus be curbed.

As illustrated in Fig. 4(b), the first color conversion layer 5 and the second color conversion layer 2 are bonded via a bonding layer 4-4b. Also, the first substrate 6 and the second substrate 1 are bonded via the bonding layer 4-4b. In other words, the first color conversion layer 5 and the second color conversion layer 2 are formed to be surrounded by the first substrate 6, the second substrate 1, and the bonding layer 4-4b. Although the bonding layer 4-4b may or may not have a heat insulating property, the bonding layer 4-4b preferably has a heat insulating property in order to prevent each of heat generated in the first color conversion layer 5 and heat generated in the second color conversion layer 2 from further moving to the other layer.

According to the third embodiment (Example 3 of the optical element) of the present technique, it is possible to curb a temperature rise in the first color conversion layer 5 and the second color conversion layer 2 through heat insulation between the two layers (between the first color conversion layer 5 and the second color conversion layer 2), and in particular, it is possible to achieve curbing of temperature quenching of light emission of the first color conversion layer 5, realizing of an increase in efficiency of the light emission, realizing of size reduction of the light source through an improvement in light emission efficiency, curbing of deterioration of the quantum dots (QD) at the time of manufacturing, and the like.

The details described above in regard to the optical element according to the third embodiment (Example 3 of the optical element) of the present technique can be applied to the optical elements according to the aforementioned first and second embodiments of the present technique and the optical elements according to the fourth to sixth embodiments of the present technique, which will be described later, as long as there are no technical contradictions, in particular.

### <5. Fourth embodiment (Example 4 of optical element)>

The optical element according to the fourth embodiment (Example 4 of the optical element) of the present technique will be described using Fig. 5. Fig. 5 is a diagram illustrating a configuration example of the optical element according to the fourth embodiment of the present technique, and more specifically, Fig. 5(a) is a sectional view of an optical element 500a according to the fourth embodiment, Fig. 5(b) is a sectional view of an optical element 500b according to the fourth embodiment, and Fig. 5(c) is a sectional view of an optical element 500c according to the fourth embodiment.

The optical element 500a illustrated in Fig. 5(a) includes a first color conversion layer 5, a second color conversion layer 2, and a heat insulating layer 3-5a with the heat insulating layer 3-5a disposed between the first color conversion layer 5 and the second color conversion layer 2.

The heat insulating layer 3-5a preferably has light transmittance in order to excite the first color conversion layer 5. Also, the heat insulating layer 3-5a is, for example, an air layer, the height (also referred to as a gap; the length in the up-down direction in Fig. 5(a)) of the heat insulating layer 3-5a may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-5a. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-5a.

The optical element 500a illustrated in Fig. 5(a) further includes a first substrate 6. The first substrate 6 is a base substrate, has light reflectivity, and is constituted by an aluminum substrate including a light reflecting film, for example. As illustrated in Fig. 5(a), the first substrate 6 has a recessed portion 6-5a, the first color conversion layer 5 is formed to be embedded in the recessed portion 6-5a, and the heat insulating layer 3-5a and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 500a, and a temperature rise in the first color conversion layer 5 can thus be curbed. Note that since the first color conversion layer 5 is embedded in the first substrate 6, not only the heat from the downward direction of the first color conversion layer 5 (the lower side of the first color conversion layer 5) but also the heat from the leftward direction (the left side of the first color conversion layer 5) and the rightward direction (the right side of the first color conversion layer 5) are also propagated through the first substrate 6 and are then dissipated to the outside of the optical element 500a, and it is thus possible to further curb the temperature rise in the first color conversion layer 5.

The optical element 500a illustrated in Fig. 5(a) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 5(a), the heat insulating layer 3-5a and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 500a, and a temperature rise in the second color conversion layer 2 can thus be curbed.

As illustrated in Fig. 5(a), the first substrate (a base substrate, for example) 6 and the second color conversion layer 2 are bonded via a bonding layer 4. The bonding layer 4 is formed in substantially the same layer as the heat insulating layer 3-5a. Although the bonding layer 4 may or may not have a heat insulating property, the bonding layer preferably has a heat insulating property in order to prevent each of heat generated in the first color conversion layer 5 and heat generated in the second color conversion layer 2 from moving to the other layer.

The optical element 500b illustrated in Fig. 5(b) includes a first color conversion layer 5, a second color conversion layer 2, and a heat insulating layer 3-5b with the heat insulating layer 3-5b disposed between the first color conversion layer 5 and the second color conversion layer 2.

The heat insulating layer 3-5b preferably has light transmittance in order to excite the first color conversion layer 5. Also, the heat insulating layer 3-5b is, for example, an air layer, the height (also referred to as a gap; the length in the up-down direction in Fig. 5(b)) of the heat insulating layer 3-5b may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-5b. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-5b.

The optical element 500b illustrated in Fig. 5(b) further includes a first substrate 6. The first substrate 6 is a base substrate, has light reflectivity, and is constituted by an aluminum substrate including a light reflecting film, for example. As illustrated in Fig. 5(b), the heat insulating layer 3-5b and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 500b as illustrated by the arrow S53b and the arrow 54b, and it is thus possible to curb a temperature rise in the first color conversion layer 5.

The optical element 500b illustrated in Fig. 5(b) further includes a second substrate 1 (1-5). The second substrate 1 (1-5) is constituted by a region 1-5b with light transmittance, a region 1-50b-1 with light reflectivity, and a region 1-50b-2 with light reflectivity here. A heat transporting substrate is formed in the region 1-5b with light transmittance, a base substrate is formed in the region 1-50b-1 with light reflectivity, and a base substrate is formed in the region 1-50b-2 with light reflectivity. The heat transporting substrate formed in the region 1-5b with light transmittance is constituted by a sapphire substrate with both the surfaces of the heat transporting substrate coated with reflection-proofing films (AR films), for example. As illustrated in Fig. 5(b), the heat insulating layer 3-5b and the second substrate 1 are disposed to face each other via the second color conversion layer 2. The second substrate 1 has heat conductivity, the heat generated at the same time with light emission in the second color conversion layer 2 is propagated through the region 1-5b with light transmittance and the region 1-50b-2 with light reflectivity in the second substrate 1 and is then dissipated to the outside of the optical element 500b as illustrated by the arrow S51b and the arrow S52b, and it is thus possible to curb a temperature rise in the second color conversion layer 2. It is possible to further improve a heat transporting property (heat dissipation property) while causing the light to be transmitted through the second color conversion layer by the second substrate 1 in Fig. 5(b) including the region with light transmittance and the region with light reflectivity. Note that the first substrate 6 may also include the region with light transmittance and the region with light reflectivity as long as the optical element 500b can secure the function of a reflective-type optical element.

As illustrated in Fig. 5(b), the first color conversion layer 5 and the second color conversion layer 2 are bonded via a bonding layer 4. The bonding layer 4 is formed in substantially the same layer as the heat insulating layer 3-5b. Although the bonding layer 4 may or may not have a heat insulating property, the bonding layer 4 preferably has a heat insulating property in order to prevent each of heat generated in the first color conversion layer 5 and heat generated in the second color conversion layer 2 from further moving to the other layer.

The optical element 500c illustrated in Fig. 5(c) includes a first color conversion layer 5, a second color conversion layer 2, and a heat insulating layer 3-5c with the heat insulating layer 3-5c disposed between the first color conversion layer 5 and the second color conversion layer 2.

The heat insulating layer 3-5c preferably has light transmittance in order to excite the first color conversion layer 5. Also, the heat insulating layer 3-5c is, for example, an air layer, the height (also referred to as a gap; the length in the up-down direction in Fig. 5(c)) of the heat insulating layer 3-5c may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-5c. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-5c.

The optical element 500c illustrated in Fig. 5(c) further includes a first substrate 6. The first substrate 6 is a base substrate, has light reflectivity, and is constituted by an aluminum substrate including a light reflecting film, for example. As illustrated in Fig. 5(c), the heat insulating layer 3-5c and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 500c, and a temperature rise in the first color conversion layer 5 can thus be curbed.

The optical element 500c illustrated in Fig. 5(c) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 5(c), the heat insulating layer 3-5c and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 500c, and a temperature rise in the second color conversion layer 2 can thus be curbed.

As illustrated in Fig. 5(c), an opening portion K5c-1 penetrating through the first substrate 6 and the first color conversion layer 5 and reaching the heat insulating layer 3-5c is formed, and an opening portion K5c-2 penetrating through the second substrate 1 and the second color conversion layer 2 and reaching the heat insulating layer 3-5c is formed. The formation of the opening portion K5c-1 and the opening portion K5c-2 allows outer air to flow through the heat insulating layer 3-5c, and in a case in which the heat insulating layer 3-5c is an air layer, the air in the heat insulating layer 3-5c is refreshed, and it is thus possible to improve the heat insulating property.

As illustrated in Fig. 5(c), the first color conversion layer 5 and the second color conversion layer 2 are bonded via a bonding layer 4. The bonding layer 4 is formed in substantially the same layer as the heat insulating layer 3-5c. Although the bonding layer 4 may or may not have a heat insulating property, the bonding layer 4 preferably has a heat insulating property in order to prevent each of heat generated in the first color conversion layer 5 and heat generated in the second color conversion layer 2 from moving to the other layer.

According to the fourth embodiment (Example 4 of the optical element) of the present technique, it is possible to curb a temperature rise in the first color conversion layer 5 and the second color conversion layer 2 through heat insulation between the two layers (between the first color conversion layer 5 and the second color conversion layer 2), and in particular, it is possible to achieve curbing of temperature quenching of light emission of the first color conversion layer 5, realizing of an increase in efficiency of the light emission, realizing of size reduction of the light source through an improvement in light emission efficiency, curbing of deterioration of the quantum dots (QD) at the time of manufacturing, and the like.

The details described above in regard to the optical element according to the fourth embodiment (Example 4 of the optical element) of the present technique can be applied to the optical elements according to the aforementioned first to third embodiments of the present technique and the optical elements according to the fifth and sixth embodiments of the present technique, which will be described later, as long as there are no technical contradictions, in particular.

### <6. Fifth embodiment (Example 5 of optical element)>

The optical element according to the fifth embodiment (Example 5 of the optical element) of the present technique is a permeable-type optical element. Details will be described using Figs. 6 and 7. Fig. 6 is a diagram illustrating a configuration example of the optical element according to the fifth embodiment of the present technique, and more specifically, Fig. 6(a) is a sectional view of an optical element 600a according to the fifth embodiment, and Fig. 6(b) is a sectional view of an optical element 600b according to the fifth embodiment. Fig. 7 is a diagram illustrating a configuration example of the optical element according to the fifth embodiment of the present technique, and more specifically, Fig. 7(a) is a sectional view of an optical element 700a according to the fifth embodiment, and Fig. 7(b) is a sectional view of an optical element 700b according to the fifth embodiment.

The optical element 600a illustrated in Fig. 6(a) includes a first color conversion layer 5, a second color conversion layer 2, and a heat insulating layer 3-6a with the heat insulating layer 3-6a disposed between the first color conversion layer 5 and the second color conversion layer 2.

The heat insulating layer 3-6a preferably has light transmittance in order to excite the first color conversion layer 5. Also, the heat insulating layer 3-6a is, for example, an air layer, the height (also referred to as a gap;' the length in the up-down direction in Fig. 6(a)) of the heat insulating layer 3-6a may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-6a. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-6a.

The optical element 600a illustrated in Fig. 6(a) may further include a first substrate 11. The first substrate 11 is a heat transporting substrate, has light transmittance, and is constituted by a sapphire substrate with both the surfaces of the first substrate 11 coated with reflection-proofing films (AR films), for example. As illustrated in Fig. 6(a), the heat insulating layer 3-6a and the first substrate 11 are disposed to face each other via the first color conversion layer 5. The first substrate 11 has heat conductivity, the heat generated at the same time with light emission in the first color conversion layer 5 is propagated through the first substrate 11 and is then dissipated to the outside of the optical element 600a, and a temperature rise in the first color conversion layer 5 can thus be curbed.

The optical element 600a illustrated in Fig. 6(a) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 6(a), the heat insulating layer 3-6a and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 600a, and a temperature rise in the second color conversion layer 2 can thus be curbed.

As illustrated in Fig. 6(a), the first color conversion layer 5 and the second color conversion layer 2 are bonded via a bonding layer 4. The bonding layer 4 is formed in substantially the same layer as the heat insulating layer 3-6a. Although the bonding layer 4 may or may not have a heat insulating property, the bonding layer 4 preferably has a heat insulating property in order to prevent each of heat generated in the first color conversion layer 5 and heat generated in the second color conversion layer 2 from further moving to the other layer.

Examples of actions and operations of the optical element 600a will be described. Note that the examples of the actions and the operations of the optical element 600a can be applied to the optical elements 600b, 700a, and 700b, which will be described later, as long as there are no technical contradictions, in particular.

Excitation light Bs is transmitted through the second substrate 1 and excites the second color conversion layer 2. The second substrate 1 may be, for example, a heat transporting substrate, have transmittance, and be a structure with a hole opened in an excitation area. Also, the first substrate 11 may also be a heat transporting substrate, for example, have transmittance, and be a structure with a hole opened in an excitation area.

The excited second color conversion layer 2 emits light. A part of the emitted light passes through the heat insulating layer 3-6a, passes through the first color conversion layer 5, passes through the first substrate eleventh (heat transporting substrate), and is then outputted to the outside of the optical element 600a (two-layer structure device) (Y: yellow light).

The excitation light Bs that is a part of fluorescence emitted by the second color conversion layer 2 and/or a part transmitted through the second color conversion layer 2 passes through the heat insulating layer 3 and excites the first color conversion layer 5. The heat insulating layer is required to be a transparent medium.

The excited first color conversion layer 5 emits light. At least a part of the emitted light passes through the first substrate eleventh (heat transporting substrate) and is then outputted to the outside of the optical element 600a (double-layer structure device) (R: red light).

The light outputted from the optical element 600a is extracted to the outside of the light source by a lens and is caused to be incident on and is used by an optical system such as an illumination system.

The optical element 600b illustrated in Fig. 6(b) includes a first color conversion layer 5, a second color conversion layer 2, and a heat insulating layer 3-6b with the heat insulating layer 3-6b disposed between the first color conversion layer 5 and the second color conversion layer 2.

The heat insulating layer 3-6b preferably has light transmittance in order to excite the first color conversion layer 5. Also, the heat insulating layer 3-6b is, for example, an air layer, the height (also referred to as a gap; the length in the up-down direction in Fig. 6(b)) of the heat insulating layer 3-6b may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-6b. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-6b.

The optical element 600b illustrated in Fig. 6(b) further includes a first substrate 12-6b. The first substrate 12-6b is a heat transporting substrate, has light transmittance, and is constituted by a sapphire substrate with both the surfaces of the first substrate 12-6b coated with reflection-proofing films (AR films), for example. The first substrate 12-6b includes a recessed portion K6b-2. The thickness of the first substrate 12-6b in the region where the recessed portion K6b-2 is formed is thinner than the thickness of the first substrate 12-6b in the region where the recessed portion K6b-2 is not formed, and it is possible to enhance light using efficiency by causing light (red light (R light)) emitted from the first color conversion layer 5 including a red quantum dot and light (yellow light (Y light)) emitted from the second color conversion layer including a YAG phosphor to be transmitted through the recessed portion K6b-2.

As illustrated in Fig. 6(b), the heat insulating layer 3-6b and the first substrate 12-6b are disposed to face each other via the first color conversion layer 5. The first substrate 12-6b has heat conductivity, the heat generated at the same time with light emission in the first color conversion layer 5 is propagated through the first substrate 12-6 and is then dissipated to the outside of the optical element 600b, and a temperature rise in the first color conversion layer 5 can thus be curbed.

The optical element 600b illustrated in Fig. 6(b) further includes a second substrate 1-6b. The second substrate 1-6b is a heat transporting substrate, has light transmittance, and is constituted by a sapphire substrate with both the surfaces of the second substrate 1-6b coated with reflection-proofing films (AR films), for example. The first substrate 1-6b includes a recessed portion K6b-1. The thickness of the second substrate 1-6b in the region where the recessed portion K6b-1 is formed is thinner than the thickness of the first substrate 1-6b in the region where the recessed portion K6b-1 is not formed, and it is thus possible to enhance light using efficiency by causing excitation light (blue light (Bs light)) to be transmitted through the recessed portion K6b-1.

As illustrated in Fig. 6(b), the heat insulating layer 3-6b and the second substrate 1-6b are disposed to face each other via the second color conversion layer 2. The second substrate 1-6b has heat conductivity, the heat generated at the same time with light emission in the second color conversion layer 2 is propagated through the second substrate 1-6b and is then dissipated to the outside of the optical element 600b, and a temperature rise in the second color conversion layer 2 can thus be curbed.

As illustrated in Fig. 6(b), the first color conversion layer 5 and the second color conversion layer 2 are bonded via a bonding layer 4. The bonding layer 4 is formed in substantially the same layer as the heat insulating layer 3-6b. Although the bonding layer 4 may or may not have a heat insulating property, the bonding layer 4 preferably has a heat insulating property in order to prevent each of heat generated in the first color conversion layer 5 and heat generated in the second color conversion layer 2 from further moving to the other layer.

The optical element 700a illustrated in Fig. 7(a) includes a first color conversion layer 5, a second color conversion layer 2, and a heat insulating layer 3-7a with the heat insulating layer 3-7a disposed between the first color conversion layer 5 and the second color conversion layer 2.

The heat insulating layer 3-7a preferably has light transmittance in order to excite the first color conversion layer 5. Also, the heat insulating layer 3-7a is, for example, an air layer, the height (also referred to as a gap; the length in the up-down direction in Fig. 7(a)) of the heat insulating layer 3-7a may be any height, for example 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-7a. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-7a.

The optical element 700a illustrated in Fig. 7(a) further includes a first substrate 13. The first substrate 13 is a heat transporting substrate, has light transmittance, and is constituted by a sapphire substrate with both the surfaces of the first substrate 13 coated with reflection-proofing films (AR films), for example. As illustrated in Fig. 7(a), the heat insulating layer 3-7a and the first color conversion layer 5 are disposed to face each other via the first substrate 13. In other words, the heat insulating layer 3-6a, the first substrate 13, and the first color conversion layer 5 are formed in this order from the incident side (the upper side in Fig. 7(a)) of the excitation light. The first substrate 13 has heat conductivity, the heat generated at the same time with light emission in the first color conversion layer 5 is propagated through the first substrate 13 and is then dissipated to the outside of the optical element 700a, and a temperature rise in the first color conversion layer 5 can thus be curbed. It is possible to efficiently achieve heat diffusion by the first substrate 13 being disposed between the heat insulating layer 3-7a and the first color conversion layer 5.

The optical element 700a illustrated in Fig. 7(a) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 7(a), the heat insulating layer 3-7a and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 700a, and a temperature rise in the second color conversion layer 2 can thus be curbed.

As illustrated in Fig. 7(a), the first substrate 13 and the second color conversion layer 2 are bonded via a bonding layer 4. The bonding layer 4 is formed in substantially the same layer as the heat insulating layer 3-7a. Although the bonding layer 4 may or may not have a heat insulating property, the bonding layer 4 preferably has a heat insulating property in order to prevent each of heat generated in the first color conversion layer 5 and heat generated in the second color conversion layer 2 from further moving to the other layer.

The optical element 700b illustrated in Fig. 7(b) includes a first color conversion layer 5, a second color conversion layer 2, and a heat insulating layer 3-7b with the heat insulating layer 3-7b disposed between the first color conversion layer 5 and the second color conversion layer 2.

The heat insulating layer 3-7b preferably has light transmittance in order to excite the first color conversion layer 5. Also, the heat insulating layer 3-7b is, for example, an air layer, the height (also referred to as a gap; the length in the up-down direction in Fig. 7(b)) of the heat insulating layer 3-7b may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-7b. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-7b.

The optical element 700b illustrated in Fig. 7(b) further includes a first substrate 14. The first substrate 14 is a heat transporting substrate, has light transmittance, and is constituted by a sapphire substrate with both the surfaces of the first substrate 14 coated with reflection-proofing films (AR films), for example. As illustrated in Fig. 7(b), the heat insulating layer 3-7b and the first color conversion layer 5 are disposed to face each other via the first substrate 14. In other words, the heat insulating layer 3-7a, the first substrate 14, and the first color conversion layer 5 are formed in this order from the incident side (the upper side in Fig. 7(b)) of the excitation light. The first substrate 14 has heat conductivity, the heat generated at the same time with light emission in the first color conversion layer 5 is propagated through the first substrate 14 and is then dissipated to the outside of the optical element 700b, and a temperature rise in the first color conversion layer 5 can thus be curbed. It is possible to efficiently achieve heat diffusion by the first substrate 13 being disposed between the heat insulating layer 3-7b and the first color conversion layer 5.

A lens 15 constituted by glass, for example, is bonded to a region on a side opposite to the region of the first color conversion layer 5 on which the heat insulating layer 3-7b is disposed. The amount of extracted emitted light (Y light and R light) increases, and the light using efficiency increases, by the lens 15 being bonded thereto.

The optical element 700b illustrated in Fig. 7(b) further includes a second substrate 1-7b. The second substrate 1-6b is a heat transporting substrate, has light transmittance, and is constituted by a sapphire substrate with both the surfaces of the second substrate 1-7b coated with reflection-proofing films (AR films), for example. The first substrate 1-7b has a recessed portion K7b. The thickness of the second substrate 1-7b in the region where the recessed portion K7b is formed is thinner than the thickness of the first substrate 1-7b in the region where the recessed portion K7b-1 is not formed, and it is thus possible to enhance light using efficiency by causing the excitation light (blue light (Bs light)) to be transmitted through the recessed portion K6b-1.

As illustrated in Fig. 7(b), the heat insulating layer 3-7b and the second substrate 1-7b are disposed to face each other via the second color conversion layer 2. The second substrate 1-7b has heat conductivity, the heat generated at the same time with light emission in the second color conversion layer 2 is propagated through the second substrate 1-7b and is then dissipated to the outside of the optical element 700b, and a temperature rise in the second color conversion layer 2 can thus be curbed.

As illustrated in Fig. 7(b), the first substrate 14 and the second color conversion layer 2 are bonded via a bonding layer 4. The bonding layer 4 is formed in substantially the same layer as the heat insulating layer 3-7b. Although the bonding layer 4 may or may not have a heat insulating property, the bonding layer 4 preferably has a heat insulating property in order to prevent each of heat generated in the first color conversion layer 5 and heat generated in the second color conversion layer 2 from further moving to the other layer.

According to the fifth embodiment (Example 5 of the optical element) of the present technique, it is possible to curb a temperature rise in the first color conversion layer 5 and the second color conversion layer 2 through heat insulation between the two layers (between the first color conversion layer 5 and the second color conversion layer 2), and in particular, it is possible to achieve curbing of temperature quenching of light emission of the first color conversion layer 5, realizing of an increase in efficiency of the light emission, realizing of size reduction of the light source through an improvement in the light emission efficiency, curbing of deterioration of the quantum dots (QD) at the time of manufacturing, and the like.

The details described above in regard to the optical element according to the fifth embodiment (Example 5 of the optical element) of the present technique can be applied to the optical elements according to the aforementioned first to fourth embodiments of the present technique and the optical element according to the sixth embodiment of the present technique, which will be described later, as long as there are no technical contradictions, in particular.

### <7. Sixth embodiment (Example 6 of optical element)>

The optical element according to the sixth embodiment (Example 6 of the optical element) of the present technique will be described using Fig. 8. Fig. 8 is a diagram illustrating a configuration example of the optical element according to the sixth embodiment of the present technique, and more specifically, Fig. 8(a) is a sectional view of an optical element 800a according to the sixth embodiment, Fig. 8(b) is a top view of a rotation wheel unit 800b including the optical element 800c according to the sixth embodiment, and Fig. 8(c) is a sectional view of an optical element 800c when the optical element 800c is cut from the closest side of the sheet surface to the furthest side of the sheet surface of a region P8 illustrated in Fig. 8(b).

The optical element 800a illustrated in Fig. 8(a) includes a first color conversion layer 5, a second color conversion layer 2, and a heat insulating layer 3-8a with the heat insulating layer 3-8a disposed between the first color conversion layer 5 and the second color conversion layer 2.

The heat insulating layer 3-8a preferably has light transmittance in order to excite the first color conversion layer 5. Also, the heat insulating layer 3-8a is, for example, an air layer, the height (also referred to as a gap; the length in the up-down direction in Fig. 8(a)) of the heat insulating layer 3-8a is any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-8a. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-8a.

The optical element 800a illustrated in Fig. 8(a) further includes a first substrate 6. The first substrate 6 is a base substrate, has light reflectivity, and is constituted by an aluminum substrate including a light reflecting film, for example. As illustrated in Fig. 8(a), the heat insulating layer 3-8a and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 800a, and a temperature rise in the first color conversion layer 5 can thus be curbed.

The first substrate 6 is connected to the rotation wheel unit, for example, and can cause the first color conversion layer 5 to rotate in the direction of the closest side of the sheet surface → the furthest side of the sheet surface → the closest side of the sheet surface. The first color conversion layer includes, for example, a red quantum dot, air is refreshed by causing the first color conversion layer 5 to rotate, and it is thus possible to efficiently cool the first color conversion layer 5 since the light emission efficiency of the red quantum dot has high temperature dependency. It is thus possible to improve light emission efficiency of the red quantum dot.

The optical element 800a illustrated in Fig. 8(a) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 8(a), the heat insulating layer 3-8a and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 800a, and a temperature rise in the second color conversion layer 2 can thus be curbed.

Note that in the optical element 800a, the first color conversion layer 5 and the first substrate 6 are fixed, and the second color conversion layer 2 and the second substrate 1 are fixed, individually with fixing members.

The optical element 800c illustrated in Fig. 8(c) includes a first color conversion layer 5, a second color conversion layer 2, and a heat insulating layer 3-8c with the heat insulating layer 3-8c disposed between the first color conversion layer 5 and the second color conversion layer 2.

The heat insulating layer 3-8c preferably has light transmittance in order to excite the first color conversion layer 5. Also, the heat insulating layer 3-8c is, for example, an air layer, the height (also referred to as a gap; the length in the up-down direction in Fig. 8(c)) of the heat insulating layer 3-8a may be any height, for example, 1 to 500 µm, and an appropriate height may be about 10 pm in some cases. It is possible to curb movement of each of heat generated in the first color conversion layer 5 and heat generated in the second color conversion layer 2 to the other layer by including the heat insulating layer 3-8c. In other words, it is possible to curb movement of the heat generated in the first color conversion layer 5 to the second color conversion layer 2, to curb movement of the heat generated in the second color conversion layer 2 to the first color conversion layer 5, and to separate a heat dissipation route of the first color conversion layer 5 from a heat dissipation route of the second color conversion layer 2 by disposing the heat insulating layer 3-8c.

The optical element 800c illustrated in Fig. 8(c) further includes a first substrate 6. The first substrate 6 is a base substrate, has light reflectivity, and is constituted by an aluminum substrate including a light reflecting film, for example. As illustrated in Fig. 8(c), the heat insulating layer 3-8c and the first substrate 6 are disposed to face each other via the first color conversion layer 5. The first substrate 6 has heat conductivity, the heat generated at the same time with light emission in the first color conversion layer 5 is propagated through the first substrate 6 and is then dissipated to the outside of the optical element 800a, and a temperature rise in the first color conversion layer 5 can thus be curbed.

The optical element 800c illustrated in Fig. 8(a) further includes a second substrate 1. The second substrate 1 is a heat transporting substrate, has light transmittance, and is constituted by a sapphire substrate with both the surfaces of the second substrate 1 coated with reflection-proofing films (AR films), for example. As illustrated in Fig. 8(c), the heat insulating layer 3-8c and the second substrate 1 are disposed to face each other via the second color conversion layer 2. The second substrate 1 has heat conductivity, the heat generated at the same time with light emission in the second color conversion layer 2 is propagated through the second substrate 1 and is then dissipated to the outside of the optical element 800c, and a temperature rise in the second color conversion layer 2 can thus be curbed.

As illustrated in Fig. 8(c), the first color conversion layer 5 and the second color conversion layer 2 are bonded via a bonding layer 4-8. As illustrated in Fig. 8(b), the bonding layer 4-8 is pattern-bonded. The bonding layer 4-8 is formed in substantially the same layer as the heat insulating layer 3-8c. Although the bonding layer 4-8 may or may not have a heat insulating property, and the bonding layer 4-8 preferably has a heat insulating property in order to prevent each of heat generated in the first color conversion layer 5 and heat generated in the second color conversion layer 2 from further moving to the other layer.

As illustrated in Fig. 8(b), the optical element 800c is connected to the rotation wheel unit 801b, the optical element 800c rotates, air successively flows to the outside as illustrated by the arrow T81c in Fig. 8(c)by a rotation inner fin included in the rotation wheel unit 801b, and an air refreshing property is thus improved. In this manner, cooling performance is enhanced, and light emission efficiency of the first color conversion layer 5 and the second color conversion layer 2 is improved. When the first color conversion layer includes a red quantum dot, in particular, air is refreshed by causing the optical element 800c to rotate, and it is thus possible to efficiently cool the first color conversion layer 5 since light emission efficiency of the red quantum dot has high temperature dependency. It is thus possible to improve light emission efficiency of the red quantum dot (red light emission efficiency).

According to the sixth embodiment (Example 6 of the optical element) of the present technique, it is possible to curb a temperature rise in the first color conversion layer 5 and the second color conversion layer 2 through heat insulation between the two layers (between the first color conversion layer 5 and the second color conversion layer 2), and in particular, it is possible to achieve curbing of temperature quenching of light emission of the first color conversion layer 5, realizing of an increase in efficiency of the light emission, realizing of size reduction of the light source through an improvement in light emission efficiency, curbing of deterioration of the quantum dots (QD) at the time of manufacturing, and the like.

The details described above in regard to the optical element according to the sixth embodiment (Example 6 of the optical element) of the present technique can be applied to the optical elements according to the aforementioned first to fifth embodiments of the present technique as long as there are no technical contradictions, in particular.

### <8. Seventh embodiment (Example 1 of light source device)>

A light source device according to a seventh embodiment (an example of a light source device) of the present technique is a light source device that includes the optical element according to at least one embodiment from among the optical elements according to the first to fourth embodiments and the sixth embodiment of the present technique, a light source that outputs excitation light, and a moving mechanism that causes the position of the optical element irradiated with the excitation light to move with time.

The light source device according to the seventh embodiment (Example 1 of the light source device) of the present technique will be described using Fig. 9. Fig. 9 is a diagram illustrating a configuration example of the light source device according to the seventh embodiment of the present technique, and more specifically, Fig. 9 is a diagram illustrating a configuration example of a light source device (reflective-type light source device) 9000 according to the seventh embodiment.

The light source device 9000 includes an excitation light source 11M, a polarized beam splitter 12M, a 1/4 wavelength plate 13M, a light condensing optical system 14M (optical system), an optical element 900, and a moving mechanism (drive unit) (not illustrated in Fig. 9).

In the light source device 9000, the light condensing optical system 14M, the 1/4 wavelength plate 13M, and the polarized beam splitter 12M are disposed in this order from the side of the optical element 900 on an optical path of light outputted from the optical element 900. Also, the excitation light source 11M is disposed in a direction that is substantially orthogonal to an optical path of the light outputted from the optical element 900.

As the excitation light source 11M, a blue laser that outputs blue light (excitation light Bs) with a wavelength of 445 nm, for example, is used. Also, the excitation light source 11M outputs the excitation light Bs that is linearly polarized light (S polarized light).

In addition, in a case in which the blue laser constitutes the excitation light source 11M, a configuration in which the excitation light Bs of a predetermined output is obtained by a single blue laser may be employed, or a configuration in which light outputted from a plurality of blue lasers is combined to obtain the excitation light Bs of a predetermined output may be employed. Moreover, the wavelength of the blue light (excitation light Bs) is not limited to 445 nm, and any wavelength can be used as long as the wavelength is within a wavelength band of light called blue light.

The polarized beam splitter 12M separates the excitation light Bs incident from the excitation light source 11M from the outputted light (combined light) incident from the optical element 900. Specifically, the polarized beam splitter 12M reflects the excitation light Bs (light of S polarization) incident from the excitation light source 11M and outputs the reflected light to the optical element 900 via the light condensing optical system 14M. Also, the polarized beam splitter 12M causes the light outputted from the optical element 900 to be transmitted therethrough and outputs the transmitted light to the outside of the light source device 9000 (the image projection device or the like, for example).

Light-splitting properties of the polarized beam splitter 12M are designed such that the aforementioned light separation operation is realized by the polarized beam splitter 12M. Also, the configuration of the optical system that separates the excitation light Bs incident from the excitation light source 11M from the light outputted from the optical element 900 is not limited to the polarized beam splitter 12M, and any optical system can be used as long as the configuration enables the aforementioned light separation operation.

The 1/4 wavelength plate 13M is a phase element that causes a phase difference of π/2 with respect to incident light, and converts linearly polarized light into a circularly polarized light in a case in which the incident light is linearly polarized light, or converts circularly polarized light into linearly polarized light in a case in which the incident light is circularly polarized light. The 1/4 wavelength plate 13M converts the excitation light that is linear polarized light outputted from the polarized beam splitter 12M into excitation light that is circularly polarized light and converts the excitation light component of the circularly polarized light included in the combined light outputted from the optical element 900 into linearly polarized light.

The light condensing optical system 14M condenses the excitation light outputted from the 1/4 wavelength plate 13M into a predetermined spot diameter and outputs the condensed excitation light (hereinafter, also referred to as a condensed light) to the optical element 900. Also, the light condensing optical system 14M converts the combined light outputted from the optical element 900 into parallel light and outputs the parallel light to the 1/4 wavelength plate 13M. Note that the light condensing optical system 14M may be constituted by a single collimate lens or may be configured to convert incident light into parallel light using a plurality of lenses, for example.

The optical element 900 includes a second substrate 100 (for example, a heat transporting substrate with light transmittance) including a dichroic film, a second color conversion layer 200, a heat insulating layer 300-9, a first color conversion layer 500, and a first substrate 600 (for example, a base substrate with light reflectivity) in this order from the incident side of the excitation light Bs. Then, the first color conversion layer 500 and the second color conversion layer 200 are bonded via a bonding layer 400. The bonding layer 400 is formed in substantially the same layer as the heat insulating layer 300-9.

The optical element 900 absorbs a part of excitation light (blue light) incident via the light condensing optical system 14M, emits light in a predetermined wavelength band, and reflects the remaining excitation light. In other words, the first color conversion layer 500 absorbs a part of the excitation light (blue light) and emits red light (light in a wavelength band of 590 to 680 nm, for example), the second color conversion layer 200 absorbs a part of the excitation light (blue light), emits yellow light (light in a wavelength band of 480 to 680 nm, for example), and reflects the remaining excitation light (blue light) using the dichroic film included in the second substrate (heat transporting substrate). Note that a part of the remaining excitation light (blue light) may be reflected by the first substrate 600 (base substrate) in some cases. Also, the optical element 900 combines the emitted light constituted by red light and yellow light and a part of the excitation light (blue light) reflected by the dichroic film (and the first substrate 600 (base substrate)) and outputs the combined light to the light condensing optical system 14.

Light (arrow P9) outputted to the outside (for example, the image projection device) of the light source device 9000 is white light (W). In the optical element 900, red light (light in a wavelength band of 590 to 680 nm, for example) is emitted from the first color conversion layer 500, and yellow light (light in a wavelength band of 480 to 680 nm, for example) is emitted from the second color conversion layer 200 using the excitation light Bs (light of S polarization). Also, the red light (R) and the yellow light (Y) are transmitted through the polarized beam splitter 12M regardless of the polarization direction, a part (light of P polarization and light of non-polarization) of the excitation light (blue light (B)) reflected by the optical element 900 passes through the polarized beam splitter 12M, the red light (R), the yellow light (Y), and the blue light (B) transmitted through the polarized beam splitter 12M are combined to generate white light (W), and the white light is outputted to the outside (the image projection device, for example) of the light source device 9000 (arrow P9).

### <9. Eighth embodiment (Example 2 of light source device)>

A light source device according to an eighth embodiment (an example of the light source device) of the present technique is a light source device that includes the optical element according to the fifth embodiment of the present technique, a light source that outputs excitation light, and a moving mechanism that causes the position of the optical element irradiated with the excitation light to move with time.

The light source device according to the eighth embodiment (Example 2 of the light source device) of the present technique will be described using Fig. 10. Fig. 10 is a diagram illustrating a configuration example of the light source device according to the eighth embodiment of the present technique, and more specifically, Fig. 10 is a diagram illustrating a configuration example of a light source device (permeable-type light source device) 10000 according to the eighth embodiment.

The light source device 10000 includes an excitation light source 11M, a light condensing optical system (optical system) 14M, an optical element 1000, and a moving mechanism (drive unit) (not illustrated in Fig. 10).

In the light source device 10000, the excitation light source 11M, the light condensing optical system 14M, and the optical element 1000 are disposed in this order.

As the excitation light source 11M, a blue laser that outputs blue light (excitation light Bs) with a wavelength of 445 nm, for example, is used.

In addition, in a case in which the blue laser constitutes the excitation light source 11M, a configuration in which the excitation light Bs of a predetermined output is obtained by a single blue laser may be employed, or a configuration in which light outputted from a plurality of blue lasers is combined to obtain the excitation light Bs of a predetermined output may be employed. Moreover, the wavelength of the blue light (excitation light Bs) is not limited to 445 nm, and any wavelength can be used as long as the wavelength is within a wavelength band of light called blue light.

The light condensing optical system 14M condenses excitation light outputted from the excitation light source 11M into a predetermined spot diameter and outputs the condensed excitation light (hereinafter, referred to as a condensed light) to the optical element 1000. Note that the light condensing optical system 14M may be constituted by a single collimate lens or may be configured to convert incident light into parallel light using a plurality of lenses, for example.

The optical element 1000 includes a second substrate (a heat transporting substrate with light transmittance, for example) 100 including a dichroic film, a second color conversion layer 200, a heat insulating layer 300-10, a first color conversion layer 500, and a first substrate (a heat transporting substrate with light transmittance, for example) 100-1 in this order from the incident side of the excitation light Bs. Then, the first color conversion layer 500 and the second color conversion layer 200 are bonded via a bonding layer 400. The bonding layer 400 is formed in substantially the same layer as the heat insulating layer 300-10.

The optical element 1000 causes excitation light (blue light) incident via the light condensing optical system 14M to pass through the second substrate 100 including a dichroic film that allows the light to be transmitted therethrough, absorbs a part of the excitation light (blue light), emits light in a predetermined wavelength band, outputs the light to the outside (the image projection device, for example) of the light source device 10000, causes remaining excitation light (blue light) to be transmitted via the first substrate 100-1, and outputs the light to the outside (the image projection device, for example) of the light source device 10000. In other words, the first color conversion layer 500 absorbs a part of the excitation light (blue light) and emits red light (light in a wavelength band of 590 to 680 nm, for example), the second color conversion layer 200 absorbs a part of the excitation light (blue light) and emits yellow light (light in a wavelength band of 480 to 680 nm, for example), the emitted light constituted by the red light and the yellow light is transmitted through the first substrate (heat transporting substrate), further, a part of the emitted light is reflected by the dichroic film included in the second substrate and is then transmitted through the first substrate, and the remaining excitation light (blue light) is transmitted through the first substrate (heat transporting substrate). Then, the optical element 1000 combines the emitted light constituted by the red light and the yellow light and a part of the excitation light (blue light) and outputs the combined light to the outside (the image projection device or the like, for example) of the light source device 10000.

The light (arrow P10) outputted to the outside (the image projection device, for example) of the light source device 10000 is, for example, white light (W), and in the optical element 1000, red light (light in a wavelength band of 590 to 680 nm, for example) is emitted from the first color conversion layer 500, yellow light (light in a wavelength band of 480 to 680 nm, for example) is emitted from the second color conversion layer 200, using the excitation light Bs. Then, the red light (R) and the yellow light (Y) and the part of the excitation light (blue light (B)) transmitted through the optical element 1000 are combined to generate white light (W).

### <10. Ninth embodiment (Example of projector)>

A projector according to a ninth embodiment (an example of a projector) of the present technique is a projector that includes the light source device (reflective-type light source device) according to the seventh embodiment of the present technique or the light source device (permeable-type light source device) according to the eighth embodiment of the present technique, and an image projection device that generates predetermined image light using light emitted from the light source device and projects the generated image light to the outside.

A projector according to the ninth embodiment (an example of a projector) of the present technique will be described using Fig. 11. Fig. 11 is a diagram illustrating a configuration example of the projector according to the ninth embodiment of the present technique, and more specifically, Fig. 11 is a diagram illustrating a configuration example of a projector 10M according to the ninth embodiment.

The projector 10M includes a light source device (reflective-type light source device) 9000M and an image projection device 2M.

The light source device 9000M includes the excitation light source 11M, the polarized beam splitter 12M, the 1/4 wavelength plate 13M, the light condensing optical system 14M (optical system), the optical element 100, and the moving mechanism (drive unit) 16M. Note that the optical element 100 (the optical element according to the first embodiment), the excitation light source 11M, the polarized beam splitter 12M, the 1/4 wavelength plate 13M, and the light condensing optical system 14M (optical system) are as described above, detailed description thereof will be omitted here.

The moving mechanism (drive unit) 16M is a motor in Fig. 11 and drives the optical element 100 to rotate at a predetermined rotation frequency. At this time, the drive unit 16M drives the optical element 100 such that the optical element 100 rotates within a plane (the surface of the optical element 100 irradiated with excitation light) that is orthogonal to the irradiation direction of the excitation light. In this manner, the position inside the optical element 100 irradiated with the excitation light changes (moves) with time at a speed corresponding to the rotation frequency inside the plane that is orthogonal to the irradiation direction of the excitation light.

It is possible to curb a temperature rise at the irradiated position and to prevent the light emission efficiency of the first color conversion layer 5 and the second color conversion layer 2 from deteriorating, by the drive unit 16M driving the optical element 100 to rotate the optical element 100 and causing the position inside the optical element 15 irradiated with the excitation light to change with time as described above. Also, it takes a bit long time (several nsec, for example) for the phosphor atom and/or the quantum dot to emit light after absorbing the excitation light and even if the phosphor atom is irradiated with the next excitation light during the excitation period, the phosphor atom does not emit light in response to the next excitation light. However, phosphor atoms and/or quantum dots that have not been excited are disposed one after another at the position irradiated with the excitation light by causing the position inside the optical element 100 irradiated with the excitation light to change with time, and it is thus possible to cause the first color conversion layer 5 and the second color conversion layer 2 to emit light with higher efficiency.

Although the example in which the drive unit 16M drives the optical element 100 to rotate the optical element 100 has been described, the present embodiment is not limited thereto, and any configuration can be employed as long as the position inside the optical element 100 irradiated with the excitation light changes with time in the configuration. For example, the position irradiated with the excitation light may be changed with time by causing the optical element 100 to linearly reciprocate in a predetermined direction in the plane that is orthogonal to the irradiation direction of the excitation light. Also, the position irradiated with the excitation light may be caused to change with time by fixing the optical element 100 and causing the excitation light source 11M and various optical systems to move relative to the optical element 100.

Also, a disc-shaped substrate 30M is attached to the first substrate (base substrate) 6 of the optical element 100, a rotation shaft 16aM coupled to the drive unit 16M penetrates through the center of the substrate 30M, and the rotation shaft 16aM is coupled to a fixing hub 16bM, as illustrated in Fig. 11. In this manner, the optical element 100 is driven and rotated by the drive unit 16M.

The image projection device 2M optically processes light (white light LW in this example) outputted from the light source device 9000M to generate image light LI and projects the image light LI to an external screen or the like, for example, in an enlarged manner. The image projection device 2M includes, for example, a light-splitting optical system 20M, three LCD optical modulation elements (hereinafter, referred to as a first LCD panel 21M to a third LCD panel 23M), a prism 24M, and a projection optical system 25M. Note that the configuration of the image projection device 2M is not limited to the example illustrated in Fig. 1 and can be appropriately changed in accordance with usage or the like, for example. For example, various optical elements needed may be appropriately disposed on optical paths between various components inside the image projection device 2M.

Also, in the image projection device 2M in this example, the first LCD panel 21M and the third LCD panel 23M are disposed such that a light outputting surface of the first LCD panel 21M and a light outputting surface of the third LCD panel 23M face each other, and the second LCD panel 22M is disposed in a direction that is orthogonal to the facing direction of the both. Also, the prism 24M is disposed in a region surrounded by the light outputting surfaces of the first LCD panel 21M to the third LCD panel 23M. Also, in this example, the projection optical system 25M is disposed at a position at which it faces the light outputting surface of the second LCD panel 22M with the prism 24M interposed therebetween. Note that the light-splitting optical system 20M is provided on the light incident side of the first LCD panel 21M to the third LCD panel 23M.

The light-splitting optical system 20M comprises a dichroic mirror, a reflection mirror, or the like, for example, to split the white light LW incident from the light source device 9000M into blue light LB, green light LG, and red light LR, and to output light of each wavelength component to a corresponding LCD panel. In this example, the light-splitting optical system 20M outputs the split blue light LB, green light LG, and red light LR to the first LCD panel 21M, the second LCD panel 22M, and the third LCD panel 23M, respectively. Note that in the present embodiment, a polarization direction of each wavelength component is also adjusted to a predetermined direction inside the light-splitting optical system 20M.

Each of the first LCD panel 21M to the third LCD panel 23M is constituted by a permeable-type LCD panel. Each LCD panel causes incident light to transmit or blocks (modulates) the incident light in units of liquid crystal cells by causing alignments of liquid crystal molecules sealed in the liquid crystal cells (not illustrated) to change on the basis of a drive signal from a panel drive unit, which is not illustrated. Also, each LCD panel outputs the modulated light with a predetermined wavelength (modulated light) to the prism 24M.

The prism 24M combines the modulation light with each wavelength component incident from each of the first LCD panel 21M to the third LCD panel 23M and outputs the combined light, that is, the image light LI to the projection optical system 25M.

The projection optical system 25M projects the image light incident from the prism 24M to a display surface such as an external screen, for example, in an enlarged manner.

Note that the embodiment of the present technique is not limited to the aforementioned each embodiment, and various modifications can be made without departing from the gist of the present technique.

Furthermore, the effects described in the present specification are merely exemplary and not intended to be limiting, and other effects may be provided as well.

The present technique can be configured as follows.
[1] An optical element including: a first color conversion layer; a second color conversion layer; and a heat insulating layer, in which the heat insulating layer is disposed between the first color conversion layer and the second color conversion layer.
[2] The optical element according to [1], in which the heat insulating layer has light transmittance.
[3] The optical element according to [1] or [2], in which the heat insulating layer contains a material with light transmittance.
[4] The optical element according to any one of [1] to [3]. In which at least any one of the first color conversion layer and the second color conversion layer has recessed and projecting portions, and
   The heat insulating layer is formed by the first color conversion layer and the second color conversion layer being bonded via the projecting portion.
[5] The optical element according to any one of [1] to [4], in which at least any one of the first color conversion layer and the second color conversion layer has a recessed portion, and
   the heat insulating layer is formed by the first color conversion layer and the second color conversion layer being bonded via the recessed portion.
[6] The optical element according to any one of [1] to [5], in which the first color conversion layer and the second color conversion layer are bonded via a bonding layer.
[7] The optical element according to [6], in which the bonding layer has a heat insulating property.
[8] The optical element according to [6] or [7], in which the bonding layer includes a bead.
[9] The optical element according to any one of [1] to [8], further comprising:
   a first substrate,
   in which the first substrate has heat conductivity, and
   the heat insulating layer and the first substrate are disposed to face each other via the first color conversion layer.
[10] The optical element according to [9], in which the first substrate has light reflectivity.
[11] The optical element according to [9] or [10], in which the first substrate has light transmittance.
[12] The optical element according to any one of [9] to [11], in which the first substrate includes a region with light transmittance and a region with light reflectivity.
[13] The optical element according to any one of [9] to [12],
   in which the second color conversion layer and the first substrate are bonded via a first bonding member, and
   the first bonding member has heat conductivity.
[14] The optical element according to [13],
   in which the first bonding member and the first substrate are bonded via a second bonding member, and
   the second bonding member has a heat insulating property.
[15] The optical element according to any one of [9] to [14],
   in which the first substrate has a recessed portion on a side of the heat insulating layer, and
   The first color conversion layer is embedded in the recessed portion.
[16] The optical element according to any one of [1] to [15], further comprising:
   a second substrate,
   in which the second substrate has heat conductivity, and
   the heat insulating layer and the second substrate are disposed to face each other via the second color conversion layer.
[17] The optical element according to [16], in which the second substrate has light transmittance.
[18] The optical element according to [16] or [17], in which the second substrate includes a region with light transmittance and a region with light reflectivity.
[19] A light source device including:
   the optical element according to any one of [1] to [18]; and
   a light source that outputs excitation light; and
   a moving mechanism that causes a position at which the optical element is irradiated with the excitation light to move with time.
[20] A projector including:
   the light source device according to [19]; and
   an image projection device that generates predetermined image light using light emitted from the light source device and projects the generated image light to outside.

### [Reference Signs List]

1, 1-5 Second substrate (heat transporting substrate)
2 Second color conversion layer
3 Heat insulating layer
4 Bonding layer
5 First color conversion layer
6 First substrate (base substrate)
11, 12-6b, 13, 14 First substrate (heat transporting substrate)
100, 200a, 200b, 300a, 300b, 400a, 400b, 500a, 500b, 500c, 600a, 600b, 700a, 700b, 800a, 800b, 900, 1000 Optical element
9000, 9000M, 10000 Optical device
10M Projector

## Claims

1. An optical element comprising: a first color conversion layer; a second color conversion layer; and a heat insulating layer,
wherein the heat insulating layer is disposed between the first color conversion layer and the second color conversion layer.

2. The optical element according to claim 1, wherein the heat insulating layer has light transmittance.

3. The optical element according to claim 1, wherein the heat insulating layer contains a material with light transmittance.

4. The optical element according to claim 1,
wherein at least any one of the first color conversion layer and the second color conversion layer has recessed and projecting portions, and
the heat insulating layer is formed by the first color conversion layer and the second color conversion layer being bonded via the projecting portion.

5. The optical element according to claim 1,
wherein at least any one of the first color conversion layer and the second color conversion layer has a recessed portion, and
the heat insulating layer is formed by the first color conversion layer and the second color conversion layer being bonded via the recessed portion.

6. The optical element according to claim 1, wherein the first color conversion layer and the second color conversion layer are bonded via a bonding layer.

7. The optical element according to claim 6, wherein the bonding layer has a heat insulating property.

8. The optical element according to claim 6, wherein the bonding layer includes a bead.

9. The optical element according to claim 1, further comprising:
a first substrate,
wherein the first substrate has heat conductivity, and
the heat insulating layer and the first substrate are disposed to face each other via the first color conversion layer.

10. The optical element according to claim 9, wherein the first substrate has light reflectivity.

11. The optical element according to claim 9, wherein the first substrate has light transmittance.

12. The optical element according to claim 9, wherein the first substrate includes a region with light transmittance and a region with light reflectivity.

13. The optical element according to claim 9,
wherein the second color conversion layer and the first substrate are bonded via a first bonding member, and
the first bonding member has heat conductivity.

14. The optical element according to claim 13,
wherein the first bonding member and the first substrate are bonded via a second bonding member, and
the second bonding member has a heat insulating property.

15. The optical element according to claim 9,
wherein the first substrate has a recessed portion on a side of the heat insulating layer, and
the first color conversion layer is embedded in the recessed portion.

16. The optical element according to claim 1, further comprising:
a second substrate,
wherein the second substrate has heat conductivity, and
the heat insulating layer and the second substrate are disposed to face each other via the second color conversion layer.

17. The optical element according to claim 16, wherein the second substrate has light transmittance.

18. The optical element according to claim 16, wherein the second substrate includes a region with light transmittance and a region with light reflectivity.

19. A light source device comprising:
the optical element according to claim 1;
a light source that outputs excitation light; and
a moving mechanism that causes a position at which the optical element is irradiated with the excitation light to move with time.

20. A projector comprising:
the light source device according to claim 19; and
an image projection device that generates predetermined image light using light emitted from the light source device and projects the generated image light to outside.
